# EUROPÄISCHE PATENTSCHRIFT

(11) **EP 3 926 228 B1**
(45) Veröffentlichungstag und Bekanntmachung des Hinweises auf die Patenterteilung: **02.04.2025**
(21) Anmeldenummer: 20180684.1
(22) Anmeldetag: 18.06.2020
(51) Int. Cl.: H04B 5/77, F16P 3/08

(54) **SICHERHEITSEINRICHTUNG**
SAFETY DEVICE
DISPOSITIF DE SÉCURITÉ

(43) Veröffentlichungstag der Anmeldung: 22.12.2021
(73) Patentinhaber: EUCHNER GmbH + Co. KG, 70771 Leinfelden-Echterdingen (DE)
(72) Erfinder: Schmitt Dr., Benedikt, 70771 Leinfelden-Echterdingen (DE); Fieg, Anne, 70597 Stuttgart (DE); Rothenburg, Jens, 72622 Nürtingen (DE)
(74) Vertreter: Ruckh, Rainer Gerhard

(56) Entgegenhaltungen:
- WO-A1-2009/089208
- US-A1- 2014 288 687
- US-A1- 2016 104 014

## Beschreibung

Die Erfindung betrifft eine Sicherheitseinrichtung.

Derartige Sicherheitseinrichtungen umfassen einen Sicherheitsschalter und wenigstens einen relativ zum Sicherheitsschalter beweglich angeordneten Betätiger. Die so ausgebildete Sicherheitseinrichtung wird allgemein im Bereich der Sicherheitstechnik eingesetzt. Ein Beispiel für einen derartigen Einsatz im Bereich der Sicherheitstechnik ist eine Zugangsabsicherung zu einem Gefahrenbereich, wobei der Zugang mit einer Schutztür verschlossen werden kann. In diesem Fall ist der Betätiger typischerweise an der Schutztür angeordnet, während der Sicherheitsschalter an einer den Zugang begrenzenden Rahmenkonstruktion angeordnet ist. Der Begriff Schutztür schließt Türen, Klappen, Hauben, Deckel, Schwenk- und Schiebetüren, sowie ähnliche Vorrichtungen ein.

Bekannte Sicherheitsschalter weisen ein RFID-System mit einem im Betätiger integrierten Transponder und einer im Sicherheitsschalter integrierten Leseeinheit auf. Mit diesem RFID-System kann die Schließstellung der Schutztür kontrolliert werden. Nur wenn sich die Tür in der Schließstellung befindet, ist der Transponder im Betätiger der Leseeinheit im Sicherheitsschalter räumlich so zugeordnet, dass Transpondersignale des Transponders von der Leseeinheit empfangen werden.

Darüber hinaus kann mit der Sicherheitseinrichtung die Schutztür in ihrer Schließstellung gesichert werden. Hierzu weist der Sicherheitsschalter typischerweise ein Zuhalteelement in Form eines Zuhaltebolzens auf, der dann, wenn sich die Schutztür in der Schließstellung befindet, in eine Aufnahme, insbesondere Ausnehmung im Betätiger, eingefahren werden kann, wodurch eine Zuhaltung der Schutztür bewirkt ist.

Der Sicherheitsschalter generiert ein Freigabesignal für den Betrieb einer Anlage im Gefahrenbereich nur dann, wenn bei bewirkter Zuhaltung auch die Schließstellung des Betätigers durch Erfassung der Signale des Transponders in der Leseeinheit erkannt wird, ansonsten wird im Sicherheitsschalter ein Abschaltbefehl für die Anlage generiert.

Das Freischalten der Anlage erfolgt generell über Sicherheitsausgänge des Sicherheitsschalters, die hierzu eingeschaltet werden.

Bei derartigen Sicherheitseinrichtungen können durch eine Konfiguration des Sicherheitsschalters unterschiedliche Funktionen, insbesondere auch sicherheitsrelevante Funktionen vorgegeben werden, um so eine Anpassung an die jeweilige Applikation vornehmen zu können.

Hierzu können neben den Betätigern, mit denen Funktionen des Sicherheitsschalters freigeschaltet werden, Konfigurationsbetätiger eingesetzt werden, die nur zur Konfiguration des Sicherheitsschalters dienen.

Nachteilig hierbei ist, dass durch die Konfigurationsbetätiger als zusätzliche Einheiten der Sicherheitseinrichtung ein erheblicher Mehraufwand entsteht, insbesondere hinsichtlich der Produktion, Lagerhaltung und des zusätzlichen Logistikaufwands. Dazu gehört einerseits die Produktion und Lagerung der unterschiedlichen Sicherheitseinrichtungen und andererseits die Unterscheidung, Support und Vermeidung von Verwechslungen.

Eine Konfiguration der Sicherheitsschalter mit einem Konfigurationsbetätiger ist nicht nachprüfbar, da die Konfiguration nicht am Sicherheitsschalter ersichtlich ist, was insbesondere beim Austausch von Sicherheitsschaltern die Gefahr von Manipulationen oder Fehlfunktionen birgt.

Weiterhin ist es bekannt, Sicherheitsschalter mittels DIP-Schaltern zu konfigurieren. Nachteilig hierbei ist, dass zur Betätigung der DIP-Schalter der Sicherheitsschalter geöffnet werden muss, was nicht nur umständlich ist, sondern höhere Herstellkosten und besondere Maßnahmen zur Dichtigkeit erfordert. Denn ohne Öffnen des Schalters, beziehungsweise Vorhalten einer Öffnung oder eines Sichtfensters sind diese Einstellungen, insbesondere beim Austausch des konfigurierten Sicherheitsschalters, von außen nicht erkennbar.

Die US 2014/0288687 A1 betrifft eine Vorrichtung zum Steuern des Betriebes einer Maschine mit einer Einrichtung zum Überwachen des Zustandes einer Schutzeinrichtung der Maschine, insbesondere einem Sicherheitsschalter zum Überwachen des geschlossenen Zustandes einer Schutztür, wobei im geschlossenen Zustand der Schutzeinrichtung von der Vorrichtung ein Freigabesignal für den Betrieb der Maschine bereitstellbar ist. Die Vorrichtung weist eine Erkennungseinrichtung zum Erkennen eines mit der Erkennungseinrichtung in Wirkverbindung bringbaren, tragbaren und von der Erkennungseinrichtung werkzeuglos entnehmbaren Sperreinsatz auf. Die Vorrichtung stellt auch im geschlossenen Zustand der Schutzeinrichtung das Freigabesignal nur bereit, wenn der Sperrsatz mit der Erkennungseinrichtung in Wirkverbindung ist.

Die WO 2009/089208 A1 betrifft ein Zugangssystem, insbesondere zum kontrollierten Zugang zu einem rechnergesteuerten Zahlungstransfer. Das Zugangssystem weist wenigstens ein RFID-Lesegerät auf. Ein Benutzer kann ein Identifikationsmittel in den Lesebereich des RFID-Lesegeräts einbringen, damit dieses einen Identifikationscode aus dem Identifikationsmittel ausliest, wodurch ein Zugang zu dem System zur Durchführung des Zahlungstransfers gewährt wird. Das Identifikationsmittel kann eine Smart Card, ein Mobiltelefon oder dergleichen sein. Ein Update von im RFID-Lesegerät gespeicherten Zugangsdaten kann mittels eines Mobiltelefons durchgeführt werden, das hierzu mit einem Server über ein Kommunikations-Netzwerk verbunden wird. Der Sensor lädt Update-Daten in das Mobiltelefon, von welchem diese in das RFID-Lesegerät eingelesen werden.

Der Erfindung liegt die Aufgabe zugrunde, eine Sicherheitseinrichtung der eingangs genannten Art bereitzustellen, mit welcher eine Erhöhung der Funktionalen Sicherheit erzielt wird.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Die Erfindung betrifft eine Sicherheitseinrichtung mit einem Sicherheitsschalter und wenigstens einem Betätiger, wobei bei in einem Ansprechbereich zum Sicherheitsschalter angeordneten Betätiger von diesem Signale an den Sicherheitsschalter übertragen werden, wodurch eine Funktion des Sicherheitsschalters freigeschaltet wird. Der Betätiger ist zusätzlich zur Konfiguration des Sicherheitsschalters ausgebildet, in dem vom Betätiger ein Konfigurationssignal an den Sicherheitsschalter übertragbar ist.

Der Grundgedanke der Erfindung besteht somit darin, den wenigstens einen Betätiger der Sicherheitseinrichtung mit einer Doppelfunktion auszustatten. Neben der bekannten Funktion des Freischaltens einer Funktion des Sicherheitsschalters kann mit dem Betätiger auch eine Konfiguration des Sicherheitsschalters durchgeführt werden.

Für die Konfiguration des Sicherheitsschalters sind somit keine zusätzlichen Einheiten wie separate Konfigurationsbetätiger erforderlich. Auch müssen keine konstruktiven Zusatzeinrichtungen wie DIP-Schalter, Öffnungen, Sichtfenster, Konfigurationseingänge, serielle Schnittstellen oder ähnliches an dem Sicherheitsschalter vorgesehen werden.

Die Funktionsweise der Sicherheitseinrichtung ist bevorzugt derart, dass der Sicherheitsschalter und der Betätiger Datenübertragungsmittel aufweisen, mittels derer bei im Ansprechbereich des Sicherheitsschalters angeordneten Betätiger zwischen diesen berührungslos Daten übertragen werden.

Zur Datenübertragung eignen sich insbesondere Funksignale, aber prinzipiell auch magnetische oder optische Signale und dergleichen.

Dabei können die Daten im Sicherheitsschalter gespeichert werden.

Besonders vorteilhaft weist der Betätiger einen Transponder und der Sicherheitsschalter eine RFID-Leseeinheit auf.

Im Transponder gespeicherte Daten können mit der RFID-Leseeinheit ausgelesen werden, sobald sich der Transponder im Ansprechbereich der RFID-Leseeinheit befindet.

Die im Transponder gespeicherten Daten liegen in Form eines Datencodes, wie beispielsweise einer Bitfolge vor, die an die RFID-Leseeinheit übertragen werden kann. Der Datencode enthält generell Identifikationsdaten sowie Daten über Funktionen und Konfigurationen, die am Sicherheitsschalter freigeschaltet werden können.

Erfindungsgemäß bildet eine definierte Eigenschaft des Datencodes, wie beispielsweise Bits der Bitfolge oder Hashwerte ein Konfigurationssignal, mit dem, wenn der Datencode in den Sicherheitsschalter eingelesen wird, eine bestimmte Konfiguration des Sicherheitsschalters festgelegt und definiert werden kann.

Dabei ist der Betätiger mit einem Datencode vorteilhaft derart ausgebildet, dass durch diesen eine genaue Konfiguration des Sicherheitsschalters vorgegeben wird. Durch diese Eindeutigkeit werden Fehlkonfigurationen des Sicherheitsschalters auch unter Störungsbedingungen sicher vermieden. Eine Konfiguration kann insbesondere auch mehrere Funktionen eines Sicherheitsschalters umfassen.

Im einfachsten Fall bildet ein Bit der Bitfolge das Konfigurationssignal.

Generell kann es auch notwendig oder zweckmäßig sein, dass mehrere Bits ein Konfigurationssignal bilden und so eine Konfiguration definieren.

Gemäß einer vorteilhaften Ausführungsform der Erfindung sind dem Sicherheitsschalter mehrere Betätiger zugeordnet.

Vorteilhaft sind dabei dem Sicherheitsschalter Betätiger zugeordnet, in welchen unterschiedliche Konfigurationssignale zur Vorgabe verschiedener Konfigurationen gespeichert sind.

Damit kann durch eine geeignete Auswahl eines Betätigers der Sicherheitsschalter in einer gewünschten Konfiguration konfiguriert werden. Dies stellt eine sehr einfache Möglichkeit dar, den Sicherheitsschalter auf unterschiedliche Weise zu konfigurieren.

Es ist möglich, dass bei einer Konfiguration des Sicherheitsschalter mit einem Betätiger die jeweilige Konfiguration im Sicherheitsschalter abgespeichert wird. Dies kann dazu beitragen, Fehlfunktionen und Manipulationen des Sicherheitsschalters zu verhindern.

Besonders vorteilhaft sind nach einer Konfiguration des Sicherheitsschalters mit einem ersten Betätiger alle weiteren Betätiger mit hierzu unterschiedlichen Konfigurationen ungültig.

Für manche Applikationen kann es zweckmäßig sein, dass mehrere Betätiger zur Verfügung stehen, um eine Funktion des Sicherheitsschalters im Arbeitsbetrieb freischalten zu können. Dies kann sinnvoll sein, um verschiedene Positionen eines Rolltores, Drehtisches oder ähnlichen mobilen Gegenständen sicher zu erkennen. Hierfür wird an jeder zu erkennenden Position jeweils ein Sicherheitsschalter angebracht.

In diesem Fall sind zweckmäßig dem Sicherheitsschalter mehrere identische Betätiger zugeordnet.

Diese mehreren Betätiger weisen dasselbe Konfigurationssignal auf und bewirken somit dieselbe Konfiguration. Wenn der Sicherheitsschalter mit dieser Konfiguration konfiguriert wurde, können damit all diese Betätiger im Arbeitsbetrieb zum Freischalten der jeweiligen Funktion verwendet werden.

Besonders vorteilhaft erfolgt die Konfiguration des Sicherheitsschalters in einem Konfigurationsmodus, der von einem Arbeitsbetrieb des Sicherheitsschalters getrennt ist, in welchem mit dem wenigstens einen Betätiger ein Freischalten einer Funktion durchgeführt wird, sobald sich der Betätiger im Ansprechbereich des Sicherheitsschalters befindet.

Vorteilhaft wechselt der Sicherheitsschalter bei einem Power Up, das heißt bei einem Einschalten, beziehungsweise bei einer Inbetriebnahme selbsttätig in den Konfigurationsmodus. Dabei wechselt der Sicherheitsschalter vorzugsweise für eine vorgegebene Zeit in den Konfigurationsmodus. Der Benutzer kann dann diese Zeitspanne nutzen um den Sicherheitsschalter mit einem Betätiger zu konfigurieren.

Vorteilhaft kann ein Konfigurieren, insbesondere ein Umkonfigurieren des Sicherheitsschalters dadurch erfolgen, dass ein Werksreset des Sicherheitsschalters durchgeführt wird, auf welchem vorteilhaft ein Einlernvorgang zum Einlernen des Datencodes des jeweiligen Betätigers folgen kann, was jedoch nicht zwingend ist.

Wird beispielsweise bei der Inbetriebnahme der Sicherheitsschalter mit einem ersten Betätiger mit einer entsprechenden ersten Konfiguration konfiguriert und soll diese nachfolgend im Arbeitsbetrieb des Sicherheitsschalters geändert werden, so kann durch den Werksreset der Arbeitsbetrieb unterbrochen werden und der Sicherheitsschalter wechselt in den Konfigurationsmodus, in dem der Sicherheitsschalter mit einem anderen Betätiger umkonfiguriert werden kann.

Gemäß einer vorteilhaften Ausgestaltung weist der Sicherheitsschalter eine Anordnung von Sicherheitsausgängen auf, wobei die Freischaltung einer Funktion des Sicherheitsschalters in einem Einschalten der Sicherheitsausgänge besteht.

Durch das Einschalten der Sicherheitsausgänge kann beispielsweise der Betrieb einer gefahrbringenden Anlage freigegeben werden.

Die Sicherheitseinrichtung kann dann zur Zugangssicherung zu einem Gefahrenbereich an dieser Anlage eingesetzt werden. Typischerweise erfolgt der Zugang zum Gefahrenbereich über mindestens eine Schutztür, beziehungsweise Klappe, Haube, Deckel, Schwenk- und Schiebetüre oder eine ähnliche Vorrichtung, die mit der Sicherheitseinrichtung überwacht wird.

Gemäß einer ersten Ausgestaltung weist die Sicherheitseinrichtung einen Sicherheitsschalter mit Verriegelung auf, das heißt mit dem Sicherheitsschalter wird kontrolliert, ob sich die Schutztür in ihrer Schließstellung befindet. Nur wenn dies der Fall ist, wird der Betrieb der Anlage über das Einschalten der Sicherheitsausgänge des Sicherheitsschalters freigegeben.

Gemäß einer zweiten Ausgestaltung weist die Sicherheitseinrichtung einen Sicherheitsschalter mit Zuhaltung auf. In diesem Fall erfolgt die Freigabe des Betriebs der Anlage über die Sicherheitsausgänge des Sicherheitsschalters nur dann, wenn mit einem Zuhalteelement des Sicherheitsschalters die Zuhaltung der Schutztür in ihrer Schließstellung bewirkt ist.

Dementsprechend können durch Betätiger mit unterschiedlichen Konfigurationssignalen je nachdem, ob ein Sicherheitsschalter mit Verriegelung oder Zuhaltung vorgesehen ist, unterschiedliche Funktionen der Verriegelung oder Zuhaltung konfiguriert werden.

Bei einem Sicherheitsschalter mit Verriegelung können beispielsweise unterschiedliche Verriegelungspositionen konfiguriert werden.

Bei einem Sicherheitsschalter mit Zuhaltung können beispielsweise die Funktionen "Personenschutz" und "Prozessschutz" konfiguriert werden, wobei im ersten Fall ein Einschalten der Sicherheitsausgänge des Sicherheitsschalters und damit eine Freigabe des Betriebs der Anlage nur dann erfolgt, wenn für die Schutztür in ihrer Schließstellung die Zuhaltung aktiv ist. Demgegenüber erfolgt im zweiten Fall das Einschalten der Sicherheitsausgänge bereits dann, wenn die Schutztür geschlossen ist.

Die Erfindung wird im Folgenden anhand der Zeichnungen erläutert. Es zeigen:
- Figur 1:: Schematische Darstellung einer Sicherheitseinrichtung für eine Gefahrenbereichsabsicherung.
- Figur 2:: Schematische Darstellung einer Sicherheitseinrichtung mit einem Sicherheitsschalter mit Verriegelung und einem zugeordneten Betätiger.
- Figur 3:: Schematische Darstellung einer Sicherheitseinrichtung mit einem Sicherheitsschalter mit Zuhaltung und einem zugeordneten Betätiger.

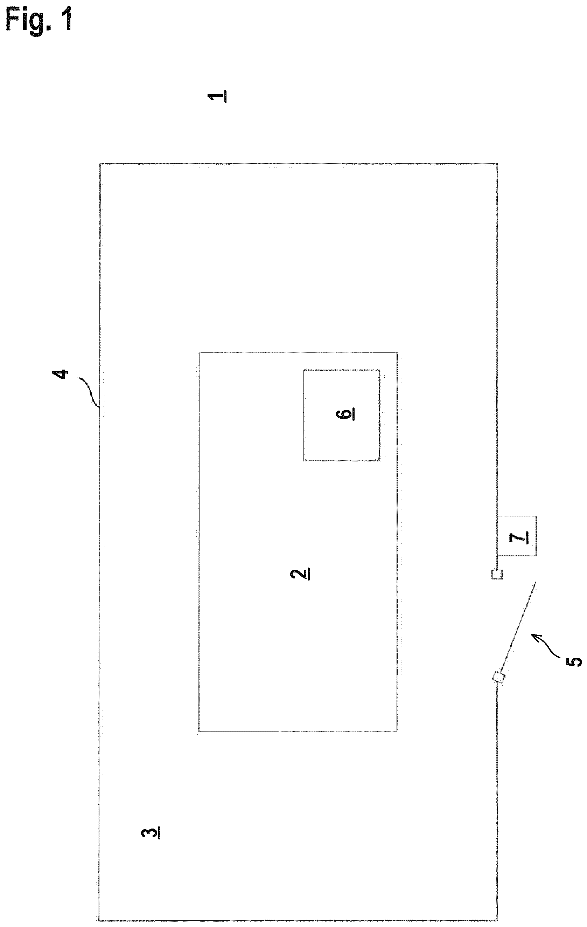

Figur 1 zeigt schematisch ein Sicherheitssystem 1 zum sicheren Betrieb einer Anlage 2. Von der Anlage 2 können Gefahren, insbesondere für Personen, ausgehen. Dementsprechend ist ein Gefahrenbereich 3 um die Anlage 2 mit einer Umzäunung 4 gesichert. In der Umzäunung 4 ist eine Schutztür 5 vorgesehen, über welche Personen Zugang zum Gefahrenbereich 3 erhalten können.

Das Sicherheitssystem 1 umfasst eine Sicherheitssteuerung 6, die den Betrieb der Anlage 2 steuert. Weiterhin ist ein Sicherheitsschalter 7 vorgesehen, mit dem überwacht wird, ob die Schutztür 5 geschlossen oder zugehalten ist oder nicht. Die Sicherheitssteuerung 6 steuert den Betrieb der Anlage 2 in Abhängigkeit der vom Sicherheitsschalter 7 generierten Signale.

Der Sicherheitsschalter 7 weist hierzu eine Anordnung von Sicherheitsausgängen auf, über welche die Signale an die Sicherheitssteuerung 6 ausgegeben werden. Dabei generiert der Sicherheitsschalter 7 Signale derart, dass der Betrieb der Anlage 2 nur dann freigegeben wird, wenn die Schutztür 5 in ihrer Schließstellung geschlossen (Prozessschutz) oder geschlossen und zugehalten (Personenschutz) ist.

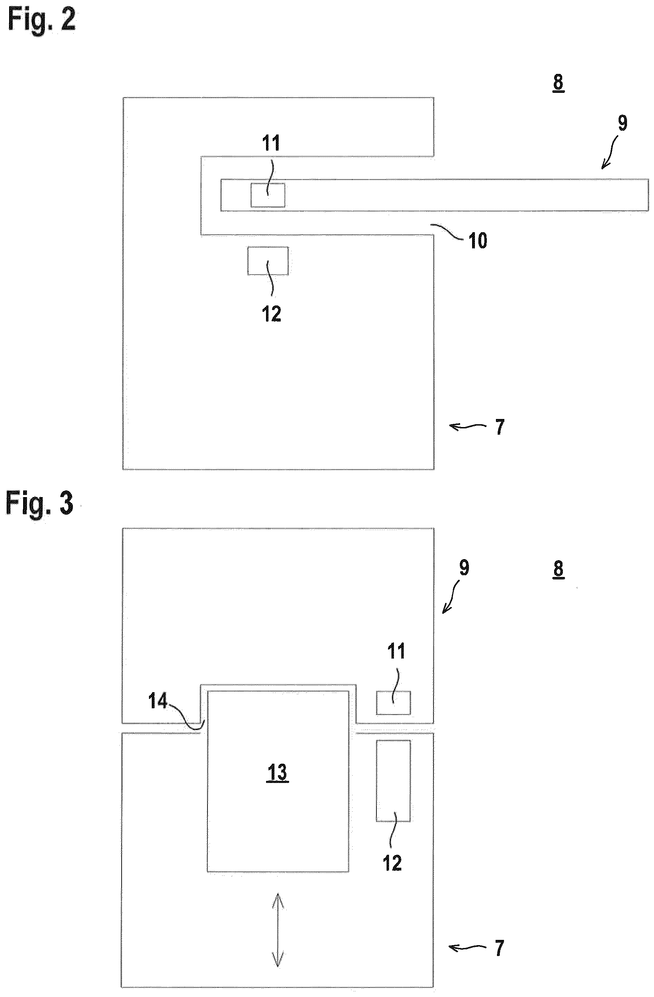

Insbesondere für Sicherheitssysteme 1 wie in Figur 1 dargestellt, ist die erfindungsgemäße Sicherheitseinrichtung 8 vorgesehen, wobei die Figuren 2 und 3 Beispiele dieser Sicherheitseinrichtung 8 zeigen.

Figur 2 zeigt schematisch eine Sicherheitseinrichtung 8 mit einem Sicherheitsschalter 7 mit Verriegelung, dem ein oder vorzugsweise mehrere Betätiger 9 mit identischer Bauform zugeordnet sind. Der Einfachheit halber ist in Figur 2 nur ein derartiger Betätiger 9 dargestellt.

Mit der Sicherheitseinrichtung 8 wird beispielsweise die Schließstellung einer Schutztür 5 wie in Figur 1 dargestellt kontrolliert, wobei hierzu der Betätiger 9 an der Schutztür 5 angeordnet sein kann.

Die Schließstellung ist dann erreicht, wenn der Betätiger 9 in den Ansprechbereich des Sicherheitsschalters 7 eingefahren ist, wobei dies bei der Ausführungsform der Figur 2 dann der Fall ist, wenn der Betätiger 9 in eine Ausnehmung 10 des Sicherheitsschalters 7 eingefahren ist.

Dann befindet sich ein Transponder 11 im Betätiger 9 im Ansprechbereich einer RFID-Leseeinheit 12 des Sicherheitsschalters 7, so dass von der RFID-Leseeinheit 12 im Transponder 11 gespeicherte Daten ausgelesen und im Sicherheitsschalter 7, vorzugsweise in einer Speichereinheit einer Rechnereinheit verarbeitet werden.

Im Arbeitsbetrieb des Sicherheitsschalters 7 erfolgt dann, wenn auf diese Weise die geschlossene Position der Schutztür 5 detektiert wird, ein Einschalten der Sicherheitsausgänge und damit die Freigabe des Betriebs der Anlage 2.

Figur 3 zeigt eine weitere Ausführungsform der Sicherheitseinrichtung 8, die wieder einen Sicherheitsschalter 7 und vorzugsweise mehrere baugleiche Betätiger 9 umfasst, von denen nur einer dargestellt ist.

Mit der in Figur 3 dargestellten Sicherheitseinrichtung 8 wird eine Zuhaltung einer Schutztür 5 in ihrer Schließstellung bewirkt und kontrolliert.

Figur 3 zeigt die Position des Betätigers 9 an der Schutztür 5, wenn sich diese in ihrer Schließstellung befindet. Dann befindet sich wieder der Transponder 11 des Betätigers 9 im Ansprechbereich der RFID-Leseeinheit 12 des Sicherheitsschalters 7, so dass mit dieser Daten aus dem Transponder 11 ausgelesen werden. Die Daten werden wieder in dem Sicherheitsschalter 7 gespeichert.

Zudem weist der Sicherheitsschalter 7 ein zwischen einer Schließ- und Öffnungsstellung bewegbares Zuhalteelement 13 auf, das von einem verfahrbaren Zuhaltebolzen gebildet sein kann. Das Verfahren des Zuhaltebolzens kann beispielsweise mittels eines Elektromagneten erfolgen. Figur 3 zeigt den Zuhaltebolzen in der Schließstellung, in welcher das Zuhalteelement 13 in eine Aussparung 14 des Betätigers 9 eingefahren ist, wodurch die Zuhaltung der Schutztür 5 bewirkt ist.

In jedem Betätiger 9 der Sicherheitseinrichtung 8 der Figuren 2 und 3, das heißt in dessen Transponder 11, sind die Daten in Form eines Datencodes gespeichert. Dabei sind in den Eigenschaften des Datencodes Identifikationsdaten und Daten betreffend die Funktionen des Betätigers 9 gespeichert. Erfindungsgemäß ist bei jedem Betätiger 9 in den Eigenschaften des Datencodes ein Konfigurationssignal kodiert, das eine Konfiguration für den Sicherheitsschalter 7 definiert. Im einfachsten Fall ist hierfür nur ein Bit vorgesehen. Generell können hierfür auch mehrere Bits vorgesehen sein. Die Eigenschaften eines Datencodes können auch von Hashwerten und dergleichen gebildet sein.

Für jede Sicherheitseinrichtung 8 der Figuren 2 und 3 sind im vorliegenden Fall mehrere Betätiger 9 dem Sicherheitsschalter 7 zugeordnet. Dabei sind in den Transpondern 11 der einzelnen Betätiger 9 unterschiedliche Konfigurationssignale zur Vorgabe unterschiedlicher Konfigurationen gespeichert. Prinzipiell können dabei auch mehrere Betätiger 9 mit jeweils identischen Konfigurationssignalen vorgesehen sein.

Vorteilhaft ist, dass während eines Arbeitsbetriebs des Sicherheitsschalters 7 mit einem Betätiger 9 nur ein Freischalten einer Funktion, wie zum Beispiel ein Einschalten der Sicherheitsausgänge, wenn sich der Transponder 11 des Betätigers 9 im Ansprechbereich der RFID-Leseeinheit 12 befindet, erfolgt. Demgegenüber wird in einem Konfigurationsmodus eine Konfiguration des Sicherheitsschalters 7 mit einem Betätiger 9 vorgegeben.

Generell ist es auch möglich, eine Konfiguration während des Arbeitsbetriebs des Sicherheitsschalters 7 vorzugeben.

Bei der Inbetriebnahme eines Sicherheitsschalters 7 oder nach einem Power Up (Einschalten) des Sicherheitsschalters 7 geht dieser vorteilhaft für eine vorgegebene Zeitdauer in den Konfigurationsmodus über, so dass der Sicherheitsschalter 7 mit einem Betätiger 9 konfiguriert werden kann. Weiterhin kann der Sicherheitsschalter 7 durch einen Werksreset in den Konfigurationsmodus versetzt werden. Ein derartiger Werksreset kann insbesondere für eine Umkonfigurierung mit einem weiteren Betätiger 9 genutzt werden.

Besonders vorteilhaft erfolgt die Konfigurierung im Konfigurationsmodus derart, dass dann, wenn ein Betätiger 9 mit seinem Transponder 11 in den Ansprechbereich der RFID-Leseeinheit des Sicherheitsschalters 7 gebracht wird, die Konfigurationssignale dieses Betätigers 9 in den Sicherheitsschalter 7 eingelesen und dort gespeichert werden. Der Sicherheitsschalter 7 übernimmt dann die den Konfigurationssignalen entsprechende Konfiguration für den nachfolgenden Arbeitsbetrieb. Alle anderen Betätiger 9 mit anderen Konfigurationssignalen werden dann automatisch ungültig.

Die Konfiguration des Sicherheitsschalters 7 bleibt dann solange erhalten, bis dieser umkonfiguriert wird. Diese Umkonfiguration wird vorteilhaft durch einen Werksreset eingeleitet.

Bei dem Sicherheitsschalter 7 mit Verriegelung gemäß Figur 2 ist beispielsweise eine Positionserkennung unterschiedlicher Türstellungen der Schutztür 5 möglich, wobei durch eine Konfiguration derartige Positionen vorgesehen werden können.

Beim dem Sicherheitsschalter 7 mit Zuhaltung gemäß Figur 3 können beispielsweise die Funktionen "Personenschutz" und "Prozessschutz" konfiguriert werden, wobei im ersten Fall ein Einschalten der Sicherheitsausgänge des Sicherheitsschalters 7 und damit eine Freigabe des Betriebs der Anlage 2 nur dann erfolgt, wenn für die Schutztür 5 in ihrer Schließstellung die Zuhaltung aktiv ist.

Demgegenüber erfolgt im zweiten Fall das Einschalten der Sicherheitsausgänge bereits dann, wenn die Schutztür 5 geschlossen ist.

### Bezugszeichenliste

- (1): Sicherheitssystem
- (2): Anlage
- (3): Gefahrenbereich
- (4): Umzäunung
- (5): Schutztür
- (6): Sicherheitssteuerung
- (7): Sicherheitsschalter
- (8): Sicherheitseinrichtung
- (9): Betätiger
- (10): Ausnehmung
- (11): Transponder
- (12): RFID-Leseeinheit
- (13): Zuhalteelement
- (14): Aussparung

## Patentansprüche

1. Sicherheitseinrichtung (8) mit einem Sicherheitsschalter (7) und wenigstens einem Betätiger (9), wobei bei in einem Ansprechbereich zum Sicherheitsschalter (7) angeordneten Betätiger (9) von diesem Signale an den Sicherheitsschalter (7) übertragen sind, wodurch eine Funktion des Sicherheitsschalters (7) freigeschaltet ist, **dadurch gekennzeichnet, dass** der Betätiger (9) zusätzlich zur Konfiguration des Sicherheitsschalters (7) ausgebildet ist, in dem vom Betätiger (9) ein Konfigurationssignal an den Sicherheitsschalter (7) übertragbar ist.

2. Sicherheitseinrichtung (8) nach Anspruch 1, **dadurch gekennzeichnet, dass** der Sicherheitsschalter (7) und der Betätiger (9) Datenübertragungsmittel aufweisen, mittels derer bei im Ansprechbereich des Sicherheitsschalters (7) angeordneten Betätiger (9) zwischen diesen berührungslos Daten übertragen werden.

3. Sicherheitseinrichtung (8) nach einem der Ansprüche 1 oder 2, **dadurch gekennzeichnet, dass** der Betätiger (9) einen Transponder (11) und der Sicherheitsschalter (7) eine RFID-Leseeinheit (12) aufweist.

4. Sicherheitseinrichtung (8) nach einem der Ansprüche 1 bis 3, **dadurch gekennzeichnet, dass** vom Betätiger (9) ein Datencode an den Sicherheitsschalter (7) gesendet wird, wobei eine vorgegebene Eigenschaft des Datencodes das Konfigurationssignal bildet.

5. Sicherheitseinrichtung (8) nach einem der Ansprüche 1 bis 4, **dadurch gekennzeichnet, dass** dem Sicherheitsschalter (7) mehrere Betätiger (9) zugeordnet sind.

6. Sicherheitseinrichtung (8) nach Anspruch 5, **dadurch gekennzeichnet, dass** dem Sicherheitsschalter (7) mehrere identische Betätiger (9) zugeordnet sind.

7. Sicherheitseinrichtung (8) nach Anspruch 5, **dadurch gekennzeichnet, dass** dem Sicherheitsschalter (7) Betätiger (9) zugeordnet sind, in welchen unterschiedliche Konfigurationssignale zur Vorgabe verschiedener Konfigurationen gespeichert sind.

8. Sicherheitseinrichtung (8) nach Anspruch 7, **dadurch gekennzeichnet, dass** nach einer Konfiguration des Sicherheitsschalters (7) mit einem ersten Betätiger (9) alle weiteren Betätiger (9) mit hierzu unterschiedlichen Konfigurationen ungültig sind.

9. Sicherheitseinrichtung (8) nach einem der Ansprüche 1 bis 6, **dadurch gekennzeichnet, dass** in einem Arbeitsbetrieb des Sicherheitsschalters (7) mit einem Betätiger (9) nur ein Freischalten von Funktionen möglich ist.

10. Sicherheitseinrichtung (8) nach einem der Ansprüche 1 bis 9, **dadurch gekennzeichnet, dass** in einem Konfigurationsmodus des Sicherheitsschalters (7) dieser mittels eines Betätigers (9) konfigurierbar ist.

11. Sicherheitseinrichtung (8) nach Anspruch 10, **dadurch gekennzeichnet, dass** der Sicherheitsschalter (7) nach einem Werksreset, bei einer Inbetriebnahme oder nach einem Einschaltvorgang in den Konfigurationsmodus wechselt.

12. Sicherheitseinrichtung (8) nach Anspruch 11, **dadurch gekennzeichnet, dass** der Sicherheitsschalter (7) für eine vorgegebene Zeitdauer in den Konfigurationsmodus wechselt.

13. Sicherheitseinrichtung (8) nach einem der Ansprüche 1 bis 12, **dadurch gekennzeichnet, dass** der Sicherheitsschalter (7) eine Anordnung von Sicherheitsausgängen aufweist, wobei die Freischaltung einer Funktion des Sicherheitsschalters (7) in einem Einschalten von Sicherheitsausgängen besteht.

14. Sicherheitseinrichtung (8) nach einem der Ansprüche 1 bis 13, **dadurch gekennzeichnet, dass** ein Sicherheitsschalter (7) mit Verriegelung oder Zuhaltung vorgesehen ist, und dass unterschiedliche Funktionen der Verriegelung oder Zuhaltung konfigurierbar sind.

## Claims

1. A safety device (8) with a safety switch (7) and at least one actuator (9), wherein with the actuator (9) arranged in a response range to the safety switch (7), signals are transmitted from the actuator to the safety switch (7), whereby a function of the safety switch (7) is enabled, **characterised in that** the actuator (9) is additionally designed for the configuration of the safety switch (7), in which a configuration signal can be transmitted from the actuator (9) to the safety switch (7).

2. . A safety device (8) according to claim 1, **characterised in that** the safety switch (7) and the actuator (9) have data transmission means by means of which data are transmitted between them without contact when the actuator (9) is arranged in the actuating range of the safety switch (7).

3. . A safety device (8) according to one of claims 1 or 2, **characterised in that** the actuator (9) has a transponder (11) and the safety switch (7) has an RFID reading unit (12).

4. . A safety device (8) according to one of claims 1 to 3, **characterised in that** a data code is sent from the actuator (9) to the safety switch (7), wherein a predetermined property of the data code forms the configuration signal.

5. . A safety device (8) according to one of claims 1 to 4, **characterised in that** several actuators (9) are assigned to the safety switch (7).

6. . A safety device (8) according to claim 5, **characterised in that** several identical actuators (9) are assigned to the safety switch (7).

7. . A safety device (8) according to claim 5, **characterised in that** actuators (9) are assigned to the safety switch (7), in which different configuration signals for specifying different configurations are stored.

8. . A safety device (8) according to claim 7, **characterised in that** after a configuration of the safety switch (7) with a first actuator (9), all further actuators (9) with different configurations to this are invalid.

9. . A safety device (8) according to one of claims 1 to 6, **characterised in that** in an operating mode of the safety switch (7) with an actuator (9), only an enabling of functions is possible.

10. . A safety device (8) according to one of claims 1 to 9, **characterised in that** in a configuration mode of the safety switch (7), this can be configured by means of an actuator (9).

11. . A safety device (8) according to claim 10, **characterised in that** the safety switch (7) changes to the configuration mode after a factory reset, during commissioning or after a switch-on process.

12. A safety device (8) according to claim 11, **characterised in that** the safety switch (7) switches to configuration mode for a predetermined period of time.

13. . A safety device (8) according to one of claims 1 to 12, **characterised in that** the safety switch (7) has an arrangement of safety outputs, wherein the activation of a function of the safety switch (7) consists of switching on safety outputs.

14. . A safety device (8) according to one of claims 1 to 13, **characterised in that** a safety switch (7) with interlocking or guard locking is provided, and **in that** different functions of the interlocking or guard locking can be configured.

## Revendications

1. Dispositif de sécurité (8) avec un interrupteur de sécurité (7) et au moins un actionneur (9), dans lequel l'actionneur (9), placé dans une zone de réponse à l'interrupteur de sécurité (7), transmet des signaux à l'interrupteur de sécurité (7), ce qui permet d'activer une fonction de l'interrupteur de sécurité (7), **caractérisé par le fait que** l'actionneur (9) est en outre conçu pour la configuration de l'interrupteur de sécurité (7), dans lequel un signal de configuration peut être transmis de l'actionneur (9) à l'interrupteur de sécurité (7).

2. . Dispositif de sécurité (8) selon la revendication 1, **caractérisé en ce que** l'interrupteur de sécurité (7) et l'actionneur (9) présentent des moyens de transmission de données au moyen desquels les données sont transmises entre eux sans contact lorsque l'actionneur (9) est disposé dans la zone d'actionnement de l'interrupteur de sécurité (7).

3. . Dispositif de sécurité (8) selon l'une des revendications 1 ou 2, **caractérisé par le fait que** l'actionneur (9) comporte un transpondeur (11) et que l'interrupteur de sécurité (7) comporte une unité de lecture RFID (12).

4. . Dispositif de sécurité (8) selon l'une des revendications 1 à 3, **caractérisé en ce qu'**un code de données est envoyé de l'actionneur (9) à l'interrupteur de sécurité (7), une propriété prédéterminée du code de données formant le signal de configuration.

5. . Dispositif de sécurité (8) selon l'une des revendications 1 à 4, **caractérisé par le fait que** plusieurs actionneurs (9) sont affectés à l'interrupteur de sécurité (7).

6. . Dispositif de sécurité (8) selon la revendication 5, **caractérisé par le fait que** plusieurs actionneurs identiques (9) sont affectés à l'interrupteur de sécurité (7).

7. . Dispositif de sécurité (8) selon la revendication 5, **caractérisé par** l'affectation d'actionneurs (9) à l'interrupteur de sécurité (7), dans lequel sont stockés différents signaux de configuration pour spécifier différentes configurations.

8. . Dispositif de sécurité (8) selon la revendication 7, **caractérisé par le fait qu'**après configuration de l'interrupteur de sécurité (7) avec un premier actionneur (9), tous les autres actionneurs (9) avec des configurations différentes sont invalides.

9. . Dispositif de sécurité (8) selon l'une des revendications 1 à 6, **caractérisé par le fait que** dans un mode de fonctionnement de l'interrupteur de sécurité (7) avec un actionneur (9), seule une validation des fonctions est possible.

10. . Dispositif de sécurité (8) selon l'une des revendications 1 à 9, **caractérisé par le fait que** dans un mode de configuration de l'interrupteur de sécurité (7), celui-ci peut être configuré au moyen d'un actionneur (9).

11. . Dispositif de sécurité (8) selon la revendication 10, **caractérisé par le fait que** l'interrupteur de sécurité (7) passe en mode de configuration après une réinitialisation d'usine, pendant la mise en service ou après un processus de mise en marche.

12. Dispositif de sécurité (8) selon la revendication 11, **caractérisé par le fait que** l'interrupteur de sécurité (7) passe en mode configuration pendant une période de temps prédéterminée.

13. . Dispositif de sécurité (8) selon l'une des revendications 1 à 12, **caractérisé par le fait que** l'interrupteur de sécurité (7) comporte un arrangement de sorties de sécurité, l'activation d'une fonction de l'interrupteur de sécurité (7) consistant à enclencher les sorties de sécurité.

14. . Dispositif de sécurité (8) selon l'une des revendications 1 à 13, **caractérisé par** la présence d'un interrupteur de sécurité (7) avec interverrouillage ou verrouillage, et par la possibilité de configurer différentes fonctions d'interverrouillage ou de verrouillage.
